# FASCICULE DE BREVET EUROPEEN

(11) **EP 3 216 662 B1**
(45) Date de publication et mention de la délivrance du brevet: **18.07.2018**
(21) Numéro de dépôt: 17159799.0
(22) Date de dépôt: 08.03.2017
(51) Int. Cl.: B60S 3/00, B60S 3/04, B01F 5/00, C11D 11/00

(54) **INSTALLATION DE LAVAGE METTANT EN OEUVRE L'EFFET LOTUS**
LOTUS-EFFEKT WASCHVORRICHTUNG
LOTUS EFFECT WASHING MACHINE

(30) Priorité: 09.03.2016 FR 1651973
(43) Date de publication de la demande: 13.09.2017
(73) Titulaire: ALSTOM Transport Technologies, 93400 Saint-Ouen (FR)
(72) Inventeur: PEREIRA, Jorge, 64200 BIARRITZ (FR)
(74) Mandataire: Lavoix

(56) Documents cités:
- EP-A2- 0 180 253
- DE-A1- 19 607 160
- FR-A- 1 403 838
- US-A- 4 977 912

## Description

La présente invention concerne une installation de lavage pour véhicule ferroviaire.

Dans le domaine ferroviaire, pour le nettoyage de la carrosserie des véhicules, on connait des installations de lavage, « au défilé » (le train se déplaçant à travers l'installation de lavage au cours du lavage) ou « stop and go » (le train s'arrêtant devant l'installation lavage pour le lavage et repartant ensuite) comportant successivement le long d'une piste de lavage sur laquelle se déplace un véhicule à laver : un système de détection de la présence d'un véhicule ; au moins un dispositif de pré-mouillage et un dispositif de pulvérisation d'un produit lessiviel ; un dispositif de brossage ; et un dispositif de rinçage et de séchage.

Le dispositif de pré-mouillage, comportant une pluralité d'arches, est implanté à l'entrée de la piste de lavage et réalise une pulvérisation d'eau propre, qui provient d'un réservoir d'eau propre avantageusement alimenté par un système de recyclage d'eau. Cela correspond à une étape de pré-mouillage.

Le dispositif de pulvérisation d'un produit lessiviel pulvérise un produit résultant du mélange d'eau propre additionnée d'un savon. Ce dispositif est implanté après le dispositif de pré-mouillage et permet de pulvériser, sous pression, de l'eau et du savon sur l'ensemble du véhicule. Cela correspond à une étape de mouillage sous pression.

Puis, le dispositif de brossage est actionné. Il est composé d'un ensemble de brosses rotatives qui nettoient mécaniquement la surface mouillée du véhicule pour enlever la saleté.

Enfin, avant la sortie de la piste de lavage, est implanté le dispositif de rinçage. Il comporte une pluralité d'arches de rinçage, notamment une arche de rinçage avec de l'eau propre et une arche de rinçage avec de l'eau adoucie. Cela correspondant à une phase de rinçage sous pression de la carrosserie.

Enfin, un dispositif de séchage permet, par projection d'air chaud, de sécher le véhicule.

L'installation fonctionne automatiquement à partir du moment où l'on détecte la présence d'un véhicule dans une zone dite « de lavage ».

L'installation comporte un local technique équipé d'un pupitre de surveillance et de commande à distance de l'installation de lavage.

De telles installations consomment des quantités importantes d'eau. Par ailleurs, le contact mécanique des brosses sur la carrosserie du véhicule à tendance à rayer cette dernière et par conséquent à en réduire la durée de vie. En outre, les brosses de lavage de la machine à laver se dégradent rapidement. Enfin, en fin de lavage, après séchage, des traces blanches peuvent apparaître sur la carrosserie lavée. FR-A-1403833 montre également une installation de lavage similaire. L'invention a donc pour but de résoudre ces problèmes.

Pour cela l'invention a pour objet une installation de lavage pour véhicule ferroviaire, caractérisée en ce qu'elle comporte : un système de texturation d'eau, mélangeant à de l'eau, des particules adaptées pour produire de l'eau texturée présentant des propriétés de super-hydrophobies ; un système de pulvérisation d'eau texturée, alimenté depuis le système de texturation d'eau et projetant, au moyen d'au moins un dispositif de pulvérisation adapté, l'eau texturée sur une surface à nettoyer du véhicule ferroviaire.

On connaît l'effet lotus qui est un phénomène d'hydrophobie de grande magnitude, aussi dénommé super-hydrophobie, causé par une rugosité micro ou nanométrique à la surface d'un solide et qui se traduit par le fait qu'une goutte d'eau déposée sur une telle surface ne la mouille pas, mais conserve une forme proche d'une goutte d'eau sphérique. Son nom provient du lotus, dont les feuilles présentent cette caractéristique. L'effet lotus confère à la surface du solide des capacités autonettoyantes, puisque une goutte d'eau n'y adhère pas et s'écoule en emportant les poussières et les particules qui s'y trouvent.

Il a par ailleurs récemment été étudié l'approche conjuguée, dite de texturation de l'eau. Dans l'article de D. Quéré, « Les surfaces super-hydrophobe », téléchargeable sur l'internet à l'adresse http://www.cnrs.fr/publications/imagesdelaphysique/couv-PDF/IdP2005/37Quere.pdf, l'auteur indique ainsi qu'« une stratégie différente pour obtenir un état ultra-hydrophobe consiste à texturer le liquide, plutôt que le solide. On peut y parvenir en tentant de mélanger une poudre hydrophobe avec de l'eau. La poudre (des microbilles de verre fluoré, des lycopodes ou de la suie) ne s'incorpore pas à l'eau, mais migre à sa surface où elle forme une sorte de peau, constituée d'une monocouche de grains. Si l'on transfère cette goutte enrobée sur un solide quelconque (du verre par exemple, ou un plastique), elle ne touche plus ce support (à cause des grains) et elle y réalise donc un état strictement non-mouillant - avec un angle de contact de 180°, qui ne dépend plus de la nature du substrat (figure 4). On appelle bille liquide un tel objet. »

Suivant des modes particuliers de réalisation, l'installation comporte une ou plusieurs des caractéristiques suivantes, prises isolément ou suivant toutes les combinaisons techniquement possibles :
- le système de texturation d'eau comporte un réservoir d'eau propre et un conteneur de particules, ainsi qu'une machine de texturation d'eau propre à mélanger l'eau propre à des particules pour produire de l'eau texturée.
- la machine de texturation d'eau comporte une cuve, dont le fond est rempli d'eau propre, et un tambour, mis en rotation au moyen d'un moteur, et dont une paroi est munie d'alvéoles permettant la circulation d'eau entre l'intérieur et l'extérieur du tambour, les particules étant introduites depuis le conteneur à l'intérieur du tambour, les alvéoles présentant une dimension inférieure à celle des particules de manière à retenir les particules à l'intérieur du tambour.
- le système de pulvérisation comporte une pluralité de rampes de pulvérisation.
- chaque dispositif de pulvérisation comporte un système de projection d'air propre à projeter de l'air chaud ou de l'air froid, éventuellement pulsé.
- l'installation de lavage ne comportant pas de moyens mécaniques de lavage.
- l'installation de lavage comporte un système de récupération d'eau texturée sale.
- le système de récupération comporte des bacs de décantation et un ensemble de filtres permettant de filtrer l'eau collectée dans le bac de décantation pour alimenter en eau propre le système de texturation d'eau.
- l'eau texturée permet la mise en oeuvre d'un effet lotus de nettoyage de la surface sur laquelle l'eau texturée s'écoule.

L'invention et ses avantages seront mieux compris à la lecture de la description détaillée qui va suivre d'un mode de réalisation particulier, donné uniquement à titre d'exemple non limitatif, cette description étant faite en se référant à l'unique dessin annexé correspondant à une représentation schématique d'une installation de lavage selon l'invention.

L'installation de lavage 10 comporte un local technique 90, un système de texturation de l'eau 20, un système de projection d'eau texturée 30 sur un véhicule ferroviaire 12 à nettoyer et un système de récupération d'eau texturée sale 40.

Le système de texturation d'eau 20 a pour fonction de produire de l'eau texturée en mélangeant à de l'eau propre, des particules adaptées.

Le système 20 comporte ainsi un réservoir d'eau propre 21 et un dispositif d'injection d'eau 22 pour injecter l'eau propre prélevée du réservoir 21 à l'intérieur d'une machine de texturation d'eau 25.

L'eau contenue dans le réservoir 21 est, dans le présent mode de réalisation, une eau recyclée. En variante ou en combinaison, l'eau du réservoir 21 est une eau de ville et/ou une eau de pluie. Dans encore une autre variante, indépendante des précédentes, l'eau du réservoir 21 est savonneuse, c'est-à-dire que l'eau propre est additionnée de savon.

Par ailleurs, le système 20 comporte un conteneur 23 constituant une réserve de particules de texturation se présentant sous la forme d'une poudre.

Les particules utilisées sont par exemple des microbilles de verre fluorées.

Un dispositif d'introduction de particules 24 permet d'introduire dans la machine de texturation 25 une quantité de poudre adaptée compte tenu du volume d'eau propre qu'elle comporte.

La machine de texturation d'eau comporte une cuve 26 en inox dont le fond est rempli d'eau.

La machine de texturation d'eau 25 comporte également un tambour 27 cylindrique, propre à être mis en rotation par un moteur électrique 28 dont est équipée la machine 25. Le tambour 27 est un cylindre en acier inoxydable dont la paroi radiale présente des alvéoles permettant à l'eau située au fond de la cuve 26 de pénétrer à l'intérieur du tambour 27. Le dispositif d'introduction de particules 24 débouche à l'intérieur du tambour 27 de manière à y déverser les particules de texturation. La dimension des alvéoles du tambour 27 est inférieure à la taille des particules de texturation. De la sorte, les particules de texturation sont confinées à l'intérieur du tambour 27.

Le tambour est muni d'une ou plusieurs aubes 29 permettant, lors de la mise en rotation du tambour 27, de brasser l'eau et les particules qui se trouvent à l'intérieur du tambour 27. Les aubes 29 placées à l'intérieur du tambour permettent d'augmenter l'énergie mécanique du brassage nécessaire à la texturation de l'eau.

Avantageusement, le tambour 27 est muni d'une trappe de visite permettant la maintenance du tambour.

Le système de projection d'eau texturée 30 comporte une pompe 31 propre à aspirer l'eau texturée depuis l'intérieur du tambour 27 de la machine 25 et à refouler l'eau texturée vers un ensemble de rampes de pulvérisation 32 disposée le long d'une piste de lavage 50.

Une rampe de pulvérisation 32 du système de projection d'eau texturée 30 comporte une canalisation 33 de distribution d'eau texturée et une pluralité de buses 34, disposées le long de la canalisation 33. Chaque buse 34 permet la pulvérisation de l'eau texturée.

La position de chaque rampe 32 le long de la piste de lavage 50, de même que pour chaque rampe 32, la forme de la canalisation 33 et la position de chaque buse 34 le long de la canalisation, ainsi que son orientation, sont adaptées pour projeter l'eau texturée sur la carrosserie du véhicule ferroviaire à nettoyer 12, arrêté sur la piste de nettoyage 50, de manière à maximiser l'effet lotus de l'eau texturée.

Par exemple, une rampe est prévue à l'entrée de la piste de lavage, une autre au milieu de la piste de lavage, et une autre encore à la sortie de la piste de lavage.

Par exemple les buses sont placées en hauteur et orientée de manière à déverser, plutôt qu'à pulvériser l'eau texturée, sur le bord du toit du véhicule, pour qu'elle ruisselle le long de la paroi latérale de la carrosserie.

Avantageusement, le système de projection 30 comporte un dispositif de projection d'air 35. Par exemple, chaque rampe de pulvérisation 32 est associée à un dispositif de projection d'air 35.

Le moyen de projection d'air permet de projeter de l'air froid, de préférence sous forme pulsée. En variante, le dispositif de projection d'air projette de l'air chaud, pulsé ou non pulsé.

Le dispositif de projection d'air a pour avantage d'accentuer l'effet lotus.

Par ailleurs, les gouttes d'eau texturée ayant tendance à rebondir, la pression à la sortie des buses est limitée pour que l'énergie cinétique des gouttes d'eau texturée soit réduite et vienne glisser sur la carrosserie du véhicule 12.

L'effet physique mis en oeuvre le long de la carrosserie du véhicule ferroviaire est le suivant. L'eau texturée projetée présentant un mouillage extrêmement faible, glisse sur la surface de la carrosserie sous l'effet de la gravité et de son énergie cinétique de projection (due à la fois à la pression dans la rampe de pulvérisation et, éventuellement, à l'air froid du rideau d'air en déplacement, créé par le dispositif de projection d'air).

Dans son déplacement sur la surface de la carrosserie, les gouttes d'eau texturée rencontrent les saletés présentent sur la surface.

Sous l'effet des chocs successifs avec des gouttes d'eau texturée, une saleté est finalement décollée de la surface et entrainée par le ruissellement de l'eau texturée vers le sol de la piste de lavage.

L'installation 10 comporte enfin un système de récupération d'eau texturée sale 40. L'eau texturée pulvérisée sur la carrosserie du véhicule 12 s'écoule le long de la carrosserie vers le sol de la piste de lavage 50. Celle-ci est munie d'un caniveau central 52, disposé, par exemple, entre les fils de rails de la piste de lavage et est inclinée pour permettre l'écoulement de l'eau texturée sale 40 vers le caniveau central 52.

Le système de récupération 40 comporte alors une canalisation d'évacuation 41 qui draine l'eau texturée sale récupérée via la piste de lavage 50 et le caniveau central 52 (recouvert de caillebottis 53) de manière à la renvoyer dans des bacs de décantation 43 du système de récupération 40.

L'eau texturée sale déversée par gravité dans les bacs de décantation 43 y repose de manière à ce que les particules de texturation se déposent en partie au fond des bacs 43 avec les saletés récupérées sur la carrosserie du véhicule 12.

En variante, le système de récupération 40 est muni d'une pompe permettant d'aspirer l'eau texturée sale présente dans la fausse 52 de manière à la renvoyer dans les bacs de décantation 43 du système de récupération 40.

L'eau texturée sale passe par débordement d'un bac de décantation à l'autre, du premier bac 43-1 au second bac 43-2, du second bac 43-2 au troisième 43-3 et du troisième 43-3 au quatrième 43-4.

L'un des bacs de décantation 43, par exemple le troisième bac 42-3, est équipé d'une grille avec un pas spécifique qui permet de récupérer les dernières particules de texturation d'eau.

Ainsi, une eau décantée peut être avantageusement renvoyée vers le réservoir d'eau propre 21 du système de texturation 20. Pour ce faire, le système de récupération 40 comporte une pompe 44 propre à forcer l'eau décantée prélevée depuis le dernier bac 43 à travers un ensemble de filtres 45 (autonettoyants) adaptés de manière à obtenir une eau propre qui alimente le réservoir 21.

L'ensemble de filtres 45 permet notamment d'éliminer les dernières impuretés et les dernières particules présentes dans l'eau décantée, pompée depuis le bac de décantation 43.

En variante, le système de récupération 40 comporte un seul bac de décantation.

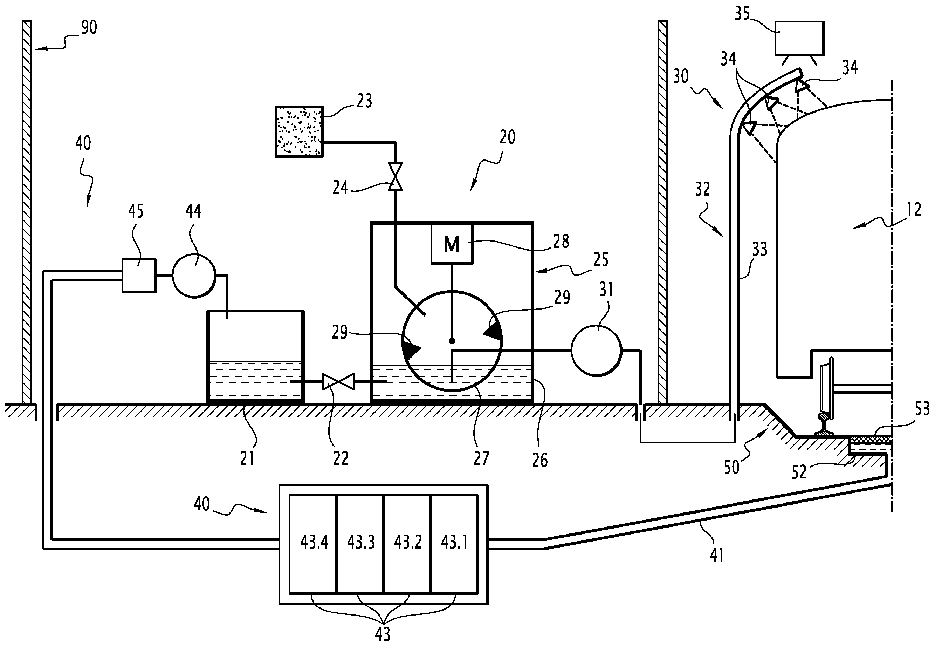

L'installation 10 comporte également une station de pilotage, non représentées sur la figure 1, permettant à un opérateur de surveiller et de contrôler à distance les différents systèmes de l'installation.

L'installation venant d'être présentée présente de nombreux avantages par rapport aux systèmes de nettoyage exploités à l'heure actuelle :
- la quantité d'eau nécessaire au lavage est réduite ;
- la perte des eaux résiduelles de lavage (eaux restantes sur les parois du véhicule ou perdues sur la piste de lavage...) sera moindre compte tenu des propriétés de texturation de l'eau ;
- le drainage de l'eau texturée est plus efficace ;
- les dépôts de saletés sont moins importants dans les canalisations internes du système de récupération 40 ;
- les produits chimiques de nettoyage (savon, coagulant, etc.), s'ils sont utilisés, le sont en moins grande quantité ;
- la qualité du nettoyage est améliorée, puisque le véhicule, une fois nettoyée, ne présente pas ces traces blanches caractéristiques d'une étape de séchage, une telle étape étant nécessaire dans les installations de l'art antérieur. Ces traces blanches sont causées par les minéraux de l'eau utilisée. Dans les installations de l'art antérieur il est ainsi nécessaire d'utiliser de l'eau déminéralisée. Avec la présente installation, en revanche, il est possible d'utiliser de l'eau sans qu'elle ait été déminéralisée. L'installation est donc simplifiée par rapport à celles de l'état de la technique ;
- l'installation selon l'invention ne comporte pas de brosses de lavage, ou plus généralement de dispositifs mécaniques de lavage, ce qui constitue une économie en termes de composants d'usure de l'installation. De plus, la carrosserie du véhicule n'est pas abîmée par le passage de brosses.

## Revendications

1. Installation de lavage (10) pour véhicule ferroviaire (12), **caractérisée en ce qu'**elle comporte :
- un système de texturation d'eau (20), mélangeant à de l'eau, des particules adaptées pour produire de l'eau texturée présentant des propriétés de super-hydrophobies ;
- un système de pulvérisation d'eau texturée (30), alimenté depuis le système de texturation d'eau (20) et projetant, au moyen d'au moins un dispositif de pulvérisation adapté, l'eau texturée sur une surface à nettoyer du véhicule ferroviaire (12).

2. Installation de lavage (10) selon la revendication 1, dans laquelle le système de texturation d'eau (20) comporte un réservoir d'eau propre (21) et un conteneur (23) de particules, ainsi qu'une machine de texturation d'eau (25) propre à mélanger l'eau propre aux particules pour produire de l'eau texturée.

3. Installation de lavage (10) selon la revendication 2, dans laquelle la machine de texturation d'eau (25) comporte une cuve (26), dont le fond est rempli d'eau propre, et un tambour (27), mis en rotation au moyen d'un moteur (28), et dont une paroi est munie d'alvéoles permettant la circulation d'eau entre l'intérieur et l'extérieur du tambour, les particules étant introduites depuis le conteneur (23) à l'intérieur du tambour, les alvéoles présentant une dimension inférieure à celle des particules de manière à retenir les particules à l'intérieur du tambour.

4. Installation de lavage (10) selon l'une quelconque des revendications précédentes, dans laquelle le système de pulvérisation comporte une pluralité de rampes de pulvérisation.

5. Installation de lavage (10) selon la revendication 4, dans laquelle chaque dispositif de pulvérisation comporte un système de projection d'air (35) propre à projeter de l'air chaud ou de l'air froid, éventuellement pulsé.

6. Installation de lavage (10) selon l'une quelconque des revendications 1 à 5, l'installation de lavage étant dépourvue de moyens mécaniques de lavage.

7. Installation de lavage (10) selon l'une quelconque des revendications précédentes, comportant un système de récupération d'eau texturée sale (40).

8. Installation de lavage (10) selon la revendication 7, dans laquelle le système de récupération comporte des bacs de décantation (43) et un ensemble de filtres (45) permettant de filtrer l'eau collectée dans le bac de décantation pour alimenter en eau propre le système de texturation d'eau (20).

## Patentansprüche

1. Waschanlage (10) für Schienenfahrzeug (12), **dadurch gekennzeichnet, dass** sie aufweist:
- ein Wasser-Strukturierungs-System (20), welches mit dem Wasser Partikel vermischt, die angepasst sind zum Erzeugen des strukturierten Wassers und die super-hydrophobe Eigenschaften haben,
- ein Strukturiertes-Wasser-Zerstäubungssystem (30), das von dem Wasser-Strukturierungs-System (20) versorgt wird und das mittels wenigstens einer angepassten Zerstäubungsvorrichtung das strukturierte Wasser auf eine zu reinigende Fläche des Schienenfahrzeugs (12) ausstößt.

2. Waschanlage (10) gemäß Anspruch 1, wobei das Wasser-Strukturierungs-System (20) ein Frischwasserreservoir (21) und einen Partikel-Behälter (23) sowie eine Wasser-Strukturierungs-Maschine (25) aufweist, die imstande ist, das Frischwasser mit den Partikeln zu vermischen zum Erzeugen des strukturierten Wassers.

3. Waschanlage (10) gemäß Anspruch 2, wobei die Wasser-Strukturierungs-Maschine (25) aufweist einen Behälter (26), dessen Boden mit Frischwasser gefüllt ist, und eine Trommel (27), die mittels eines Motors (28) in Drehung versetzt wird und von der eine Wand mit Kavitäten versehen ist, welche die Zirkulation von Wasser zwischen dem Inneren und dem Äußeren der Trommel ermöglichen, wobei die Partikel von dem Behälter (23) aus in das Innere der Trommel eingegeben werden, wobei die Kavitäten eine innere Abmessung haben, die kleiner ist als jene der Partikel, um die Partikel im Inneren der Trommel rückzuhalten.

4. Waschanlage (10) gemäß irgendeinem der vorhergehenden Ansprüche, wobei das Zerstäubungssystem eine Mehrzahl von Zerstäubungsrampen aufweist.

5. Waschanlage (10) gemäß Anspruch 4, wobei jede Zerstäubungsvorrichtung eine Luft-Ausstoß-System (35) aufweist, das imstande ist, warme Luft oder kalte Luft, eventuell pulsierend, auszustoßen.

6. Waschanlage (10) gemäß irgendeinem der Ansprüche 1 bis 5, wobei die Waschanlage mit mechanischen Wasch-Mitteln ausgestattet ist.

7. Waschanlage (10) gemäß irgendeinem der vorhergehenden Ansprüche, aufweisend ein System zur Wiedergewinnung von verbrauchtem strukturiertem Wasser (40).

8. Waschanlage (10) gemäß Anspruch 7, wobei das System zur Wiedergewinnung aufweist Klärbecken (43) und eine Einrichtung von Filtern (45), die es erlauben, das in dem Klärbecken gesammelte Wasser zu filtern zum Versorgen des Wasser-Strukturierungs-Systems (20) mit Frischwasser.

## Claims

1. Washing machine (10) for a railway vehicle (12), **characterised in that** it includes:
- a water texturing system (20), mixing appropriate particles with water to produce textured water having super-hydrophoby properties;
- a textured water spraying system (30), fed by the water texturing system (20) and using at least one appropriate spraying device to spray the textured water on a surface of a railway vehicle (12) to be cleaned.

2. Washing machine (10) according to claim 1, wherein the water texturing system (20) includes a clean water reservoir (21) and a particle container (23), as well as a water texturing machine (25) capable of mixing a clean water supplied by the clean water reservoir with particles supplied by the particle container to produce the textured water.

3. Washing machine according to claim 2, wherein the water texturing machine (25) includes a tank (26), the bottom of which is filled with the clean water, and a drum (27), rotated using a motor (28), and one wall of which is provided with cells allowing the clean water to circulate between an inside and an outside of the drum, the particles being introduced from the container (23) to the inside of the drum, the cells being smaller than the particles so as to keep the particles inside the drum.

4. Washing machine (10) according to any one of the preceding claims, wherein the textured water spraying system includes a plurality of spray bars.

5. Washing machine (10) according to claim 4, wherein each spraying bars includes an air spraying system (35) to spray hot or cold air, optionally pulsed.

6. Washing machine (10) according to any one of the claims 1 to 5, the washing machine having no mechanical washing means.

7. Washing machine (10) according to any one of the preceding claims, including a dirty textured water recovery system (40).

8. Washing machine (10) according to claim 7, wherein the dirty textured water recovery system includes a decanting tub (43) and a set of filters (45) filtering the dirty water collected in the decanting tub to supply the water texturing system (20) with the clean water.
